**Europäisches Patentamt**

**European Patent Office**

**Office européen des brevets**

(19)

(11) Veröffentlichungsnummer: **0 163 850**
**B1**

# (12) EUROPÄISCHE PATENTSCHRIFT

(45) Veröffentlichungstag der Patentschrift:
21.09.88

(21) Anmeldenummer: 85104215.0

(22) Anmeldetag: 06.04.85

(51) Int. Cl.⁴: **B 41 B 19/00**, G 06 K 15/12,
**B 41 B 21/32**

(54) **Verfahren und Vorrichtung zum Synchronisieren einer Materialbahn, insbesondere fotosensitiver
Materialbahn in einem Fotosetz-verfahren.**

(30) Priorität: 23.05.84 DE 3419288

(43) Veröffentlichungstag der Anmeldung:
11.12.85 Patentblatt 85/50

(45) Bekanntmachung des Hinweises auf die Patenterteilung:
21.09.88 Patentblatt 88/38

(84) Benannte Vertragsstaaten:
AT CH DE GB LI

(56) Entgegenhaltungen:
US-A-4 037 230
US-A-4 190 867

(73) Patentinhaber: **Linotype AG, Mergenthaler Allee 55-
75, D-6236 Eschborn (DE)**

(72) Erfinder: **Reiniger, Jürgen, Am Hang 1F, D-6368
Bad Vilbel (DE)**

(74) Vertreter: **Schubert, Siegmar, Dipl.- Ing.,
Patentanwälte Dr. V. Schmied- Kowarzik Dr. P.
Weinhold Dr.- Ing. G. Dannenberg Dr. D. Gudel
Dipl.- Ing. S. Schubert Dr. P. Barz Grosse
Eschenheimer Strasse 39, D-6000 Frankfurt am
Main 1 (DE)**

**Beschreibung**

Die Erfindung betrifft ein verfahren zum Synchronisieren einer Materialbahn, insbesondere fotosensitiver Materialbahn in einem Fotosetzverfahren nach dem Oberbegriff des Anspruchs 1.

Ein weiterer Aspekt der Erfindung betrifft eine Einrichtung zum Ausüben des entsprechenden Verfahrens.

In Eingabescannern oder Ausgabescannern sind eine mit annähernd konstanter Geschwindigkeit bewegte Materialbahn und eine dazu im wesentlichen rechtwinklig verlaufende Ablenkbewegung eines Ablenksystems zu synchronisieren, damit die Materialbahn mit Ablenkzeilen abgetastet wird, die möglichst geradlinig mit zueinander konstantem Abstand verlaufen. Besonders beim Setzen typographischer Schriftzeichen, bei dem das fotosensitive Material mit einem entsprechend Bildpunkten mit einer Pixelfrequenz modulierten Lichtstrahlenbündel abgetastet, d.h. bildmäßig belichtet wird, kommt es auf eine genaue Synchronisation an, da schon geringe Formund Lageabweichungen der auf das Bahnmaterial projizierten Ablenkzeilen ästhetisch stören können.

Hierzu sind genaue Regelungen der Ablenkgeschwindigkeit eines Ablenksystems, insbesondere eines Polygonspiegels, sowie des Antriebs der fotosensitiven Materialbahn vorzusehen, deren Sollwerte von einem gemeinsamen Taktpuls abgeleitet werden. Damit können die Bewegungen des Ablenksystems und des Antriebs der fotosensitiven Materialbahn genügend genau korreliert werden, wenn diese Bewegungen nach einer Anlaufphase eingeschwungen sind.

Dagegen kann auch bei aufwendigen digitalen miteinander gekoppelten Geschwindigkeitsregelungen nach einer Unterbrechung des Abtastens der Materialbahn die nächste Abtastung längs einer Ablenkzeile nicht ohne weiteres so erfolgen, daß die reguläre Abtaststruktur auf der Materialbahn erhalten bleibt, vielmehr geht der gewünschte geometrische Zusammmenhang verloren. Unterbrechungen des Abtastens treten beispielsweise im Fotosatz dann auf, wenn ein Rechner Daten zur Pixelmodulation des abtastenden Strahlbündels zeitweise nicht bereitstellen kann.

Der vorliegenden Erfindung liegt daher die Aufgabe zugrunde, ein Verfahren zum Synchronisieren der in dem Oberbegriff des Anspruchs 1 vorgesehenen Gattung vorzusehen, bei dem nach einer Unterbrechung des Abtastens dieses so wieder aufgenommen wird, daß die reguläre Abtaststruktur der Abtastungen auf der Materialbahn erhalten bleibt. Das bedeutet, daß die Abtastung nach einer Unterbrechung wieder an einem bestimmten Ort (Abtastposition) auf der Materialbahn mit den Geschwindigkeiten des eingeschwungenen Zustands der Ablenkbewegung und des Antriebs der Materialbahn zu beginnen hat.

Diese Aufgabe wird durch die in dem kennzeichnenden Teil des Anspruchs 1 angegebene Erfindung gelöst.

Bei dem erfindungsgemäßen Verfahren wird davon ausgegangen, daß bei einer Unterbrechung der Abtastung bzw. bildmäßigen Belichtung die genaue geschwindigkeitsgeregelte Ablenkbewegung weiter läuft, während der Vorschub der Materialbahn angehalten wird und wieder anläuft. Während der Ablenkbewegung erzeugte Bezugssignale für Zeit und Ablenkposition, die an einer bestimmten Stelle jeder Ablenkzeile gebildet werden und normalerweise als Startsignale zur Abtastung längs der Ablenkzeile dienen, werden zur Positionierung des Bahnmaterials während der Unterbrechungsdauer und Synchronisation mit der Ablenkbewegung zu einem bestimmbaren Zeitpunkt vor Beendigung der Unterbrechungsdauer herangezogen. Während der durch die Bezugssignale definierten Zeitintervalle laufen voreingestellte definierte Verzögerungs- und Beschleunigungsvorgänge mit Rücklauf und Vorlauf der Materialbahn ab, die durch die Taktimpulse präzise gesteuert werden. Bei der Steuerung dieser Vorgänge wird auf ein ausgewähltes erstes Bezugssignal Bezug genommen, welches normalerweise den Beginn der nächsten Abtastung in einer Ablenkzeile auf der Materialbahn signalisiert. Hier wird zunächst die Materialbahn definiert abgebremst, entgegen der Transportrichtung definiert über den Stillstand hinaus beschleunigt, mit konstanter Rücklaufgeschwindigkeit zurückgefahren und wiederum definiert zum Stillstand abgebremst. In dieser bestimmten Warteposition kann die Materialbahn während einer variierbaren Wartezeit, d.h. beliebiger durch die Bezugssignale begrenzter Zeitintervalle, verharren, bis sie zu einer ebenfalls durch die Zeitintervalle vorbestimmten Vorlaufzeit definiert auf die konstante Transportgeschwindigkeit beschleunigt wird und mit dieser bei einer gewünschten Korrelation zwischen Ablenkbewegung und Transportbewegung wieder die Abtastposition auf dem Bahnmaterial erreicht. - Während dem definierten Abbremsen und Beschleunigen sind vorteilhaft alle Verzögerungs- und Beschleunigungsstrecken zum Einhalten der Bedingungen für den Einlauf in die nächste für eine Abtastung nutzbare Abtastposition nach einer Unterbrechung des Abtastens gleich. Dazu werden Weginkrementsignale, die das Verzögern und Beschleunigen in Abhängigkeit von den Taktimpulsen steuern, gezählt und zur Steuerung herangezogen.

Durch die Bezugnahme auf die erste wählbare Abtastposition zu Beginn einer Abtastunterbrechung gehen Motor- und Getriebefehler nicht in die Genauigkeit der Wiedereinstellung dieser Abtastposition ein, die daher mit sehr großer Genauigkeit bei Abschluß der Unterbrechung erreicht wird.

Erfolgt die zeilenweise Ablenkbewegung des optischen Wegs mit einem Polygonspiegel mit mehreren spiegelnden Flächen, so wird nach Anspruch 2 zusätzlich erreicht, daß nach der Unterbrechung diejenige spiegelnde Fläche die Abtastung wieder aufnimmt, die vor Unterbrechung zuletzt abgetastet hatte. Damit können sich Toleranzen der Ausrichtung der spiegelnden Flächen in dem Spiegelpolygon nicht nachteilig auf die Genauigkeit und Reproduzierbarkeit der Abtastungen auswirken. Durch die Maßnahme nach Anspruch 3 brauchen die Steuerungsmittel zum Beschleunigen und Verzögern nur eine wenig aufwendige lineare Rampenfunktion zu erfüllen und die mechanischen Mittel zum Transport des Bahnmaterials werden nicht durch Beschleunigungsspitzen belastet.

Eine besonders zweckmäßige Einrichtung zur Ausübung des erfindungsgemäßen Verfahrens, die sich durch relativ geringen Aufwand auszeichnet, ist in Anspruch 4 gekennzeichnet.

Die Erfindung wird im folgenden anhand einer Zeichnung mit 3 Figuren, die sich auf ein Ausführungsbeispiel bezieht, erläutert. Es zeigen:

Figur 1 ein stark vereinfachtes System mit Strahlengang und Blockschaltbild eines typografischen Setzgeräts,

Figur 2 schematisch einen gewünschten Verlauf der Abtastzeilen auf der Materialbahn und

Figur 3 Zeitdiagramme der Geschwindigkeit (v) und der Lage (s) der Materialbahn bei einer Unterbrechung der Abtastung.

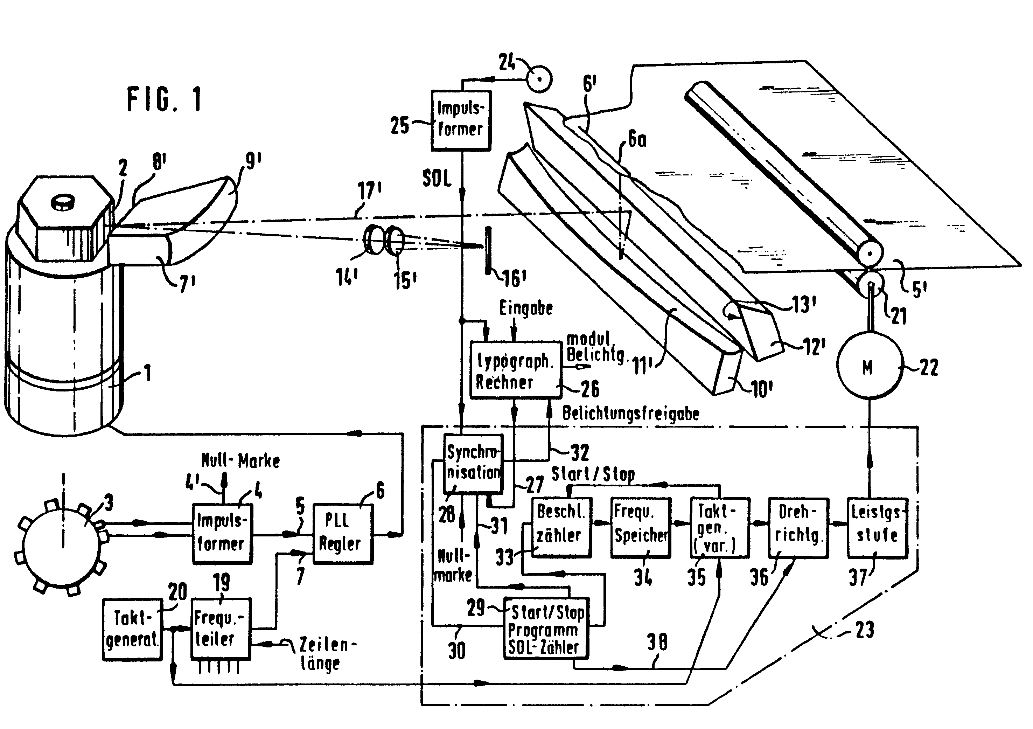

In Figur 1 gehört zu einem Flachbett-Ablenksystem als optisches System ein Polygonspiegel 2 mit sechs um jeweils 120° gegenseitig versetzten drehbaren spiegelnden Flächen. Der Polygonspiegel wird durch einen Motor 1 angetrieben.

In dem Strahlengang zwischen dem Polygonspiegel 2 und einer planen Ablenkebene 5', die in einem typographischen Setzgerät durch eine lichtempfindliche Materialbahn dargestellt sein kann, ist die Optik zum Projizieren eines auf die drehbare spiegelnde Fläche einfallenden Strahlenbündels in die Ablenkebene 5' sowie zum Linearisieren der Beziehung zwischen einem Ablenkwinkel entsprechend dem Drehwinkel des Polygons und der Position des in eine Ablenkzeile 6' projizierten Strahlenbündels angeordnet:

Die Optik umfaßt in der Nähe des Polygons eine aplanatische Einzellinse 7' mit einer dem Polygon zugewandten, annähernd planen Fläche 8' und einer zweiten, der Ablenkebene zugewandten sphärisch-konvexen Fläche 9'.

Hieran schließt sich im weiteren Verlaufe des Strahlengangs zwischen dem Polygon und der Ablenkebene ein feldebnender Spiegel 10' mit einer sphärischen reflektierenden Fläche 11' an. Die sphärische reflektierende Fläche ist einerseits auf die Ablenkebene und zugleich auf einen zwischengeschalteten Umlenkzeilenspiegel 12' mit einer ebenen reflektierenden Fläche 13' gerichtet, die wiederum auf die sphärisch-konvexe Fläche der aplanatischen Einzellinse weist.

In dem beschriebenen Ablenksystem sind außerhalb dieses Systems im Strahlengang noch eine Objektivlinse 14' und eine Zerstreuungslinse 15' vorgeschaltet, die unter anderem zu einer Vorkorrektur der sphärischen Aberration des Ablenksystems dienen.

Ausgehend von einer Zwischenbildebene 16', in die ein Bildpunkt eines typographischen Schriftzeichens mit üblichen optischen Mitteln, insbesondere mit einer Dekollimatorlinse (nicht dargestellt) projiziert sein kann, verläuft das Strahlenbündel durch die Zerstreuungslinse 15' und die Objektivlinse 14', die sphärisch-konvexe Fläche 9' der aplanatischen Einzellinse und tritt aus deren annähernd planer Fläche als Bündel kollimierten Lichts aus. So trifft das Bündel auf die drehbare spiegelnde Fläche des Polygonspiegels 2 und wird entsprechend der augenblicklichen Drehstellung des Polygons in die aplanatische Einzellinse 7' zurückgespiegelt, um nach Austritt aus deren sphärisch-konvexer Fläche 9' an einer kontrollierten Position 6a innerhalb der Ablenkzeile 6' projiziert zu werden. Die übrigen optischen Elemente des Ablenksystems tragen korrigierend zur Fokussierung bei. Das von der sphärisch-konvexen Fläche 9' in Richtung auf die Ablenkebene ausgehende Strahlenbündel wird über die ebene reflektierende Fläche 13' des Umlenkzeilenspiegels 12' in die sphärisch reflektierende Fläche 11' des feldebnenden Spiegels 10' reflektiert und von dieser vollständig fokussiert in die Position 6a in der Ablenkzeile gelenkt. Der Umlenkzeilenspiegel trennt dabei den von der aplanatischen Einzellinse einfallenden Strahl von dem von dem feldebnenden Spiegel reflektierten Strahl.

Zum genau geschwindigkeitsgeregelten Antrieb des Polygonspiegels 2 dient eine digitale Regeleinrichtung mit einem mit dem Motor gekuppelten Drehwinkelimpulsgeber 3, dessen Drehwinkelimpulse über einen Impulsformer 4 in einen Istwerteingang 5 eines digitalen PLL Reglers eingespeist werden. Der Drehwinkelimpulsgeber erzeugt außerdem ein Nullmarkensignal in einer einzigen definierten Drehstellung an dem Ausgang 4' des Impulsformers 4. Ein Sollwerteingang 7 des PLL Reglers wird mit Impulsen gespeist, die durch einen einstellbaren Frequenzteiler 19 untersetzt aus einem Frequenzgenerator 20 stammen. Entsprechend der Einstellung des Frequenzteilers regelt der PLL Regler 6 eine konstante Drehzahl des Motors 1 und des Polygonspiegels 2 ein, dessen spiegelnde Flächen das Strahlenbündel 17', d.h. einen Teil des optischen Wegs in jeweils einer Ablenkzeile 6' ablenken.

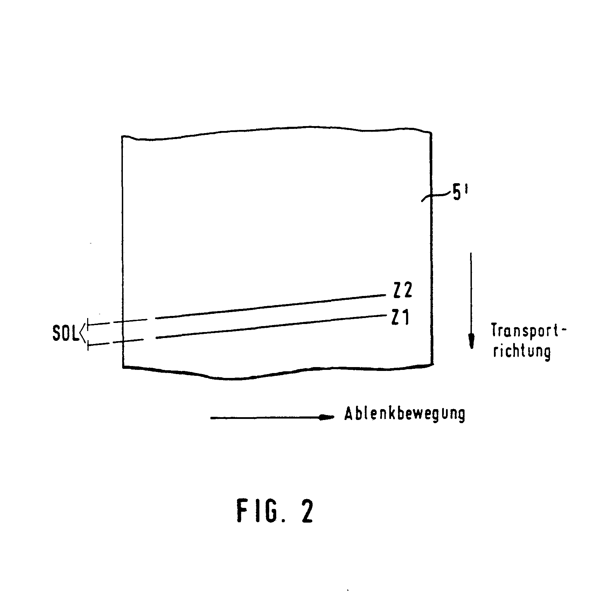

Dabei kann die Materialbahn 5' mit einem Antriebswalzenpaar 21 und einem Schrittmotor 22 mit konstanter Geschwindigkeit in Transportrichtung - siehe auch Figur 2 - transportiert werden. Eine allgemein mit 23 bezeichnete Geschwindigkeitsund Lagesteuereinrichtung, die in Figur 1 mit unterbrochenen Linien umrandet ist, speist dazu einen Puls mit konstanter Pulsfrequenz in den Schrittmotor 22 ein, die gegebenenfalls durch den Taktgenerator 20 synchronisiert wird.

Durch Projektion der Ablenkbewegung des Polygonspiegels auf das Bahnmaterial kann dieses in Ablenkzeilen Z1, Z2 bildmäßig belichtet (abgetastet) werden, die geradlinig und mit konstantem Abstand zueinander verlaufen, siehe Figur 2.

Zum Auslösen der bildmäßigen Belichtung in jeder Ablenkzeile wird ein Bezugssignal SOL für Zeit und Ablenkposition an einer vorbestimmten Stelle zu Beginn der Ablenkzeile erzeugt, wozu ein lichtempfindliches Element 24 und ein Impulsformer 25 dienen.

Zur bildmäßigen Belichtung wird ein nicht dargestelltes Laserstrahlenbündel mit Bildpunkten durch einen typographischen Rechner 26 mit Modulator helligkeitsmoduliert. Hierzu werden in den typographischen Rechner typographische Daten - Text und weitere Daten - eingegeben, aus denen eine Bildpunktfrequenz (Pixelfrequenz) erzeugt wird.

Bei der Verarbeitung der typographischen Daten insbesondere bei kleineren Schriftgraden kann es vorkommen, daß der typographische Rechner noch keine vollständig errechneten Daten und Signale zur Modulation des Laserstrahlenbündels für die nächste Ablenkzeile bereitstellen kann, wenn die letzte Abtastzeile bei kontinuierlichem Vorschub der- Materialbahn an der vorgesehenen Stelle projiziert wurde. Deswegen wird der Transport der Materialbahn durch ein Stopsignal angehalten, welches der typographische Rechner über eine Leitung 27 in eine Synchronisationseinrichtung 28 einspeist. Daraus ergibt sich die Aufgabe, die Materialbahn wieder so anlaufen zu lassen, daß die nächste bildmäßige Belichtung in einer projizierten Ablenkzeile Z2 in einer vorbestimmten Lage zu der zuletzt belichteten Ablenkzeile Z1 und mit einer definierten konstanten Geschwindigkeit erfolgt, als ob keine Unterbrechung des Transports vorgekommen wäre.

Hierzu umfaßt die Geschwindigkeits- und Lagesteuereinrichtung die Synchronisationseinrichtung, die u.a. mit den Bezugssignalen SOL aus dem Impulsformer 25 gespeist wird, von denen durch je einen Nullmarkenimpuls je eines für jede Umdrehung des Polygonspiegels ausgewählt wird. Damit löst jeweils die gleiche spiegelnde Fläche wieder ein ausgewähltes Bezugssignal aus, wenn eine vorbestimmte Ablenkposition erreicht wird. Die Synchronisationseinrichtung 28 speist die ausgewählten Bezugssignale in einen Bezugssignalzähler (SOL-Zähler) mit einem Start/Stop-Programmteil 29 über eine Leitung 30 ein. Die Synchronisationseinrichtung kann außerdem über eine Leitung 31 mit einem Steuersignal aus dem Start/Stop-Programmteil und Bezugssignalzähler gespeist werden. - Durch Auszählen einer der Anzahl der spiegelnden Flächen entsprechenden Zahl Bezugsimpulse können alternativ zu einer logischen Disjunktion mit der Null-Marke diejenigen Bezugsimpulse ausgewählt werden, die einer bestimmten spiegelnden Fläche zugeordnet sind. - Ein Signal auf einer Freigabeleitung 32 von der Synchronisationseinrichtung zu dem typographischen Rechner kann die modulierte Belichtung längs einer auf eine Unterbrechung folgenden Ablenkzeile freigeben. Ein Ausgang des Start/Stop-Programmteils mit Bezugssignalzähler ist zu einem Eingang eines Vorwärts-Rückwärtszählers 33 für Beschleunigen oder Abbremsen der Materialbahn geführt. Dieser steuert einen Frequenzspeicher 34, der in Verbindung mit einem programmierbaren Taktgenerator 35 u.a. eine Frequenzvariation für Verzögerungs- und Beschleunigungsvorgänge des Schrittmotors 22 auslöst. Diese Einheiten 34, 35 erzeugen aus Zeitinkrementen, die z. B. durch Taktpulse des konstanten Taktgenerators gebildet werden, Weginkrementimpulse. Das Verhältnis zwischen Zeit- und Wegimpulsen wird bevorzugt während der Beschleunigung oder Verzögerung auf jeweils lineare Änderung eingestellt. Die bei einem Transport oder einem Rücklauf der Materialbahn konstanten Geschwindigkeiten werden durch Synchronisation der Weginkrementimpulse mit dem konstanten Taktpuls aufeinander abgestimmt. Auf den programmierbaren Taktgenerator folgen eine konventionelle Drehfeldsteuerungseinrichtung 36 mit einer Leistungsstufe 37. Die jeweilige Drehfeldrichtung wird ebenfalls durch den Programmteil 29 gesteuert: Leitung 38.

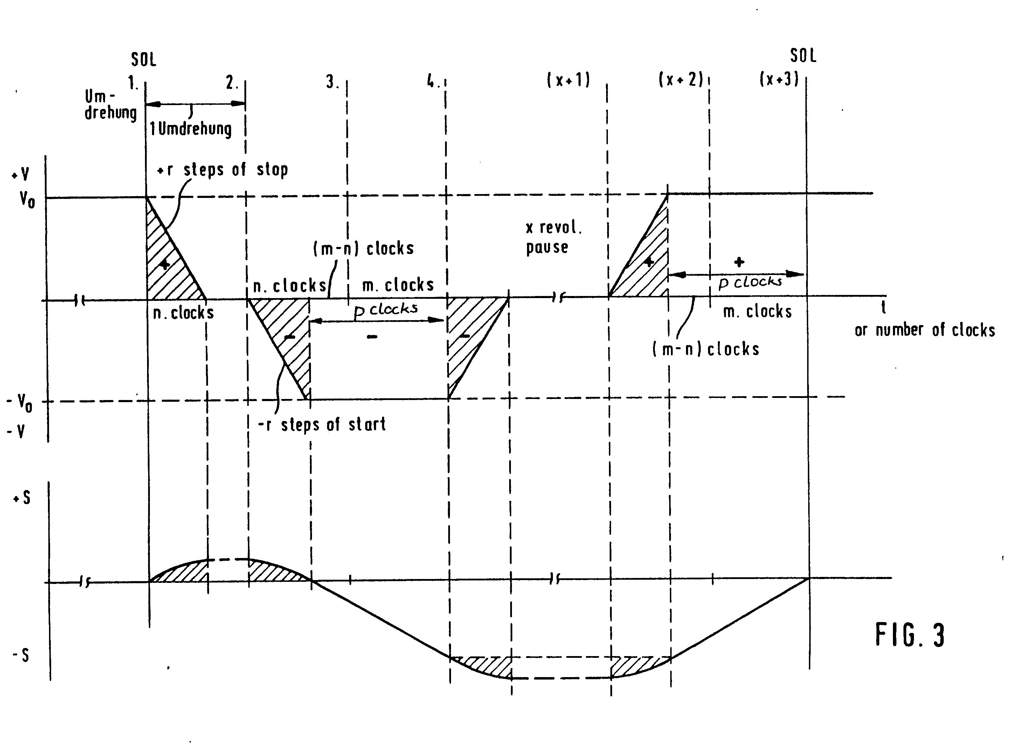

Bei der folgenden Erläuterung des Synchronisationsverfahrens mit der in Figur 1 dargestellten Einrichtung wird auch auf Figur 3 Bezug genommen:

Während des bildmäßigen Belichtens der letzten Ablenkzeile stellt der typographische Rechner 26 fest, daß er nicht in der Lage sein wird, die Pixelmodulationssignale rechtzeitig zur Belichtung längs der nächsten Ablenkzeile vollständig zur Verfügung zu stellen. Er gibt ein Stopsignal über die Leitung 27 an die Synchronisationseinrichtung vor dem Bezugssignal SOL der 1. Umdrehung des Polygonspiegels ab. die Umdrehungen werden dabei für die Abtastunterbrechung jeweils beim Auftreten eines Bezugssignals gezählt in dem Bezugssignalzähler 29 mit Start/Stopprogrammteil.

Der Start/Stop-programmteil 29 befiehlt bei dem Bezugssignal der 1. Umdrehung über den Frequenzspeicher 34 und den programmierbaren Taktgenerator 35, daß der Schrittmotor 22 während n Taktimpulsen linear abgebremst wird bis zum Stillstand. Die dazu erforderlichen r Weginkrementimpulse werden in dem Vorwärts-Rückwärtszähler 33 mitgezählt. Die Materialbahn ist dann um einen Streckenabschnitt s über die Stellung der nächsten regulären Abtastposition hinausgeschossen.

Ab dem Bezugssignal für die 2. Umdrehung wird dieser Überschuß rückgängig gemacht, in dem der Schrittmotor 22 durch die Drehfeldrichtungssteuerung umgesteuert rückwärts linear beschleunigt wird, bis er nach n Taktimpulsen und wiederum r Weginkrementimpulsen auf eine Rücklaufgeschwindigkeit $-V_o$ beschleunigt ist, die gleich der konstanten Transportgesckwindigkeit $+V_o$ ist.

Dieser konstante Rücklauf erfolgt dann über das Bezugssignal für die 3. Umdrehung hinaus bis zum Bezugssignal für die 4. Umdrehung während (m-n) Taktimpulsen plus m Taktimpulsen, wobei m die Anzahl Taktimpulse zwischen zwei Bezugssignalen ist, d.h. für insgesamt p Taktimpulse (clocks).

Anschließend wird ab dem Bezugssignal für die 4. Umdrehung der Schrittmotor 22 wieder linear verzögert bis zum Stillstand abgebremst, so daß die Materialbahn vor dem nächsten Bezugssignal eine Wartestellung einnimmt.

In dieser Wartestellung verharrt die Materialbahn wenigstens während einer beliebigen Anzahl Umdrehungen x solange, bis der typographische Rechner 26 zur bildmäßigen Belichtung längs einer nächsten Ablenkzeile bereit ist, der in diesem Fall ein Startsignal an die Synchronisationseinrichtung 28 abgibt. Die Synchronisationseinrichtung befiehlt dann den nächsten Start des Schrittmotors in Transportrichtung bei dem Bezugssignal zu der (x + l)ten Umdrehung, der wieder mit r Weginkrementimpulsen auf konstante Transportgeschwindigkeit linear beschleunigt wird. Der Schrittmotor 22 und die mit ihm gekuppelten Antriebselemente (incl. Antriebswalzenpaar 21) können während eines Zeitintervalls bis zu dem Bezugssignal der (x + 3)ten Umdrehung auf die konstante Transportgeschwindigkeit einschwingen, so daß die Materialbahn mit dieser in die Abtastposition bei dem Bezugssignal der (x + 3)ten Umdrehung einläuft, die gleich der Abtastposition ist, durch welche die Materialbahn bei dem Bezugssignal SOL bei der l. Umdrehung lief. Es wird für diesen Zeitpunkt die bildmäßige Belichtung längs der Ablenkzeile durch ein Belichtungsfreigabesignal auf der Leitung 32 freigegeben.

Aus Fig. 3 ist ersichtlich, daß die zum Beschleunigen auf und Einschwingen der Transportgeschwindigkeit benötigte Transportstrecke zwischen den Bezugssignalen für die (x + l)te Umdrehung und die (x + 3)te Umdrehung gleich der Rücklaufstrecke zwischen den Bezugssignalen für die 2. und 3. Umdrehung ist. Die Abbremsstrecken zwischen den Bezugssignalen der 1. und 2. Umdrehung einerseits und den Bezugssignalen der 4. und folgenden Umdrehung heben sich einander auf.

## Patentansprüche

1. Verfahren zum Synchronisieren einer Materialbahn, insbesondere fotosensitiver Materialbahn in einem Fotosetzverfahren, bei dem ein optischer Weg quer zu der Bewegungsrichtung der mit annähernd konstanter Transportgeschwindigkeit transportierbaren Materialbahn in Ablenkzeilen ausgelenkt und gegebenenfalls abgetastet (bildmäßig belichtet) wird, wobei die Transportgeschwindigkeit und die Ablenkgeschwindigkeit durch gemeinsame Taktimpulse steuerbar sind und wobei zu Beginn jeder Ablenkzeile ein Bezugssignal (SOL) für Zeit und Ablenkposition erzeugt wird, dadurch gekennzeichnet, daß bei Unterbrechung des Abtastens (bildmäßigen Belichtens) unter weiterem zeilenmäßigen Ablenken des optischen Wegs weiterhin Bezugssignale erzeugt werden, daß die Materialbahn ab einem ersten ausgewählten Bezugssignal ab Beginn der Unterbrechung mit n Taktimpulsen bis zum Stillstand verzögert wird, ab einem darauf folgenden (ab Beginn der Unterbrechung 2.) Bezugssignal mit n Taktimpulsen auf eine der Transportgeschwindigkeit entgegengesetzt gleiche Rücklaufgeschwindigkeit beschleunigt wird, anschließend mit p Taktimpulsen mit der Rücklaufgeschwindigkeit bis zu einem darauffolgenden (z. B. ab Beginn der Unterbrechung 4.) Bezugssignal rückgestellt wird, ab letztgenanntem Bezugssignal mit n Taktimpulsen bis zum Stillstand verzögert wird, nach einer variierbaren Pause bis zu einem darauffolgenden (z. B. ab Beginn der Unterbrechung 5.) Bezugssignal mit n Taktimpulsen auf die Transportgeschwindigkeit beschleunigt wird und anschließend mit p Taktimpulsen bis zu einem folgenden (z. B. ab Beginn der Unterbrechung 7.) Bezugs signal mit der Transportgeschwindigkeit in eine Abtastposition einläuft, die gleich der Abtastposition bei dem ersten ausgewählten Bezugssignal ist.

2. Verfahren zum Synchronisieren, bei dem der optische Weg mittels eines Polygonspiegels mit mehreren spiegelnden Flächen in Ablenkzeilen ausgelenkt wird, nach Anspruch 1, dadurch gekennzeichnet, daß als Bezugssignal dasjenige ausgewählt wird, das erzeugt wird, wenn jeweils nach einer Umdrehung des Polygonspiegels dieselbe der spiegelnden Flächen eine Ablenkzeile beginnt, mit der die Materialbahn bei einer Abtastunterbrechung zuletzt abgetastet wurde.

3. Verfahren nach Anspruch 1 oder 2, dadurch gekennzeichnet, daß die Materialbahn bei einer Unterbrechung des Abtastens in den angegebenen Verzögerungs bzw. Beschleunigungsphasen jeweils mit konstanter Verzögerung-bzw. Beschleunigung verzögert oder beschleunigt wird.

4. Einrichtung zur Ausübung des Verfahrens nach einem der Ansprüche 1-3,

dadurch gekennzeichnet, daß eine Synchronisationseinrichtung (28) zur Steuerung einer Start/Stop-Steuereinrichtung (Start/Stop-Programmteil) mit Bezugssignalzähler (29) mit diesen in Verbindung steht und Eingänge für das Bezugssignal und für externe Start/Stops-Signale der Abtastung (z. B. aus einem typographischen Rechner 26) aufweist, daß der Start/Stop-Programmteil mit Bezugssignalzähler mit Mitteln zum Beschleunigen und Abbremsen eines Schrittmotors mit gespeicherten Beschleunigungs- und Verzögerungsrampenfunktionen sowie zum geschwindigkeitskonstanten Rücklauf und Vorlauf über vorbestimmte Zeitabschnitte in Verbindung steht.

## Claims

1. A method for synchronising a material web, in particular a photosensitive material web, in a photocomposing process, in which an optical trace is deflected into scan lines and optionally scanned (pictorially exposed) transversely to the direction of movement of the material web transportable with approximately constant transport velocity, wherein the transport velocity and the scanning velocity are controllable by common timing pulses and wherein at the beginning of each scanning line a reference signal (SOL) for timing and scanning position is generated,

Characterised in that, on interruption of the scanning (pictorial exposure), with continued line-by-line deflection of the optical trace reference signals continue to be generated, that the material web, from the onset of a first selected reference signal, is decelerated to a stop by means of $n$ timing pulses from the beginning of the interruption,

that as from a thereon following reference signals (as from the beginning of the 2nd interruption) the material web is accelerated by means of $n$ timing pulses to a reverse velocity equal to that of the advance velocity,

that thereafter, with $p$ timing pulses, it is reset with the reverse velocity until the instant of a next following reference signal (for example as from the beginning of the 4th interruption),

that from the instant of the last-mentioned reference signal it is decelerated to stop by means of $n$ timing pulses,

that after a variable pause until a subsequent reference signal (for example at the start of interruption 5) said web is accelerated with $n$ timing pulses to advance velocity, whereafter it is run with $p$ timing pulses until the appearance of a following reference signal (for example as from the start of the interruption) at transport velocity into a scanning position, which is equal to the scanning position at the first selected reference signal.

2. A synchronising method, in which the optical path is deflected into scanning lines by means of a polygonal mirror with several reflecting surfaces, according to Claim 1,

characterised in that there is selected as reference signal that signal which is generated when each time after a revolution of the polygonal mirror the same one of the reflecting surfaces starts a scanning line with which the material web was last scanned during a scan interruption.

3. A method according to Claim 1 or 2, characterised in that

the material web, in an interruption of the scanning, is always decelerated or accelerated in the respective deceleration or acceleration phases with constant deceleration or acceleration.

4. A device for putting into effect the method according to any one of Claims 1 - 3,

characterised in that a synchronising device (28) for controlling a start/stop control device (start/stop program element) with a referance signal counter (29) is connected therewith and has inputs for the reference signal and for external start/stop signals of the scanning (for example from a thypographic computer 26), that the start/stop program element with reference signal counter is in connection with means for accelerating and braking a stepping motor with stored acceleration and deceleration ramp functions as well as with means for constant-velocity reverse and advance movment over predetermined time intervals.

## Revendications

1. Procédé pour synchroniser le mouvement d'une bande de matériau, en particulier d'une bande de matériau photosensible dans une méthode de photocomposition, selon lequel un chemin optique est dévié transversalement à la direction de mouvement de la bande, pouvant être transportée à une vitesse de transport sensiblement constante, dans des lignes de balayage avec exploration (exposition photographique) éventuelle de la bande, la vitesse de transport et la vitesse de balayage pouvant être commandées par des impulsions d'horloge communes et avec génération, au début de chaque ligne de balayage, d'un signal de référence (SOL) pour le temps et la position de déviation,

caractérisé en ce que, en cas d'interruption de l'exploration (exposition photographique), la génération de signaux de référence continue, pendant que la déviation ligne par ligne du chemin optique se poursuit, et que la bande est ralentie, à partir d'un premier signal de référence sélecté depuis le début de l'interruption, à l'aide de n impulsions d'horloge et jusqu'à l'arrêt,

accélérée à partir d'un signal de référence suivant (depuis le début de l'interruption 2) à l'aide de n impulsions d'horloge à une vitesse de retour égale mais de sens contraire à la vitesse de transport,

ramenée ensuite en arrière à l'aide de p impulsions d'horloge, à la vitesse de retour et jusqu'à un signal de référence suivant (par exemple depuis le début de l'interruption 4),

ralentie à partir du signal de référence mentionné en dernier et à l'aide de n impulsions d'horloge jusqu'à l'arrêt,

accélérée, après une pause variable, à la vitesse de transport, à l'aide de n impulsions l'horloge, jusqu'à un signal de référence suivant (par exemple depuis le début de l'interruption 5), et amenée ensuite à l'aide de p impulsions d'horloge et à la vitesse de transport à une position d'exploration, jusqu'à un signal de référence suivant (par exemple depuis le début de l'interruption 7), position qui est la même que la position d'exploration au premier signal de référence sélecté.

2. Procédé de synchronisation dans lequel le chemin optique est dévié au moyen d'un miroir polygonal possédant plusieurs faces de miroir dans des lignes de balayage, selon la revendication 1,

caractérisé en ce que, comme signal de référence, on choisit le signal généré lorsque, après chaque tour du miroir polygonal, la face de miroir par laquelle la bande a été explorée en dernier, lors d'une interruption de l'exploration, commence une ligne de balayage.

3. Procédé selon la revendication 1 ou 2, caractérisé en ce que la bande, lors d'une interruption de l'exploration, est ralentie ou accélérée chaque fois avec une décélération ou une accélération constante dans les phases de ralentissement ou d'accélération indiquées.

4. Dispositif pour la mise en oeuvre du procédé selon une des revendications 1 à 3, caractérisé en ce qu'il comprend un dispositif de synchronisation (28), servant à piloter un dispositif de commande marche-arrêt (partie de programme start-stop) comprenant un compteur de signaux de référence (29), qui est en liaison avec celui-ci et présente des entrées pour le signal de référence et pour des signaux start-stop externes de l'exploration (signaux qui proviennent par exemple d'un calculateur typographique 26), et que la partie de programme start-stop à compteur de signaux de référence est en liaison avec des moyens pour accélérer et freiner un moteur pas à pas avec des fonctions en rampe d'accélération et de décélération mémorisées, ainsi que pour le retour et l'avance à vitesse constante pendant des intervalles de temps prédéterminés.

# FIG. 1

0 163 850

Null-Marke

SOL

Eingabe

modul Belichtg.

typograph. Rechner — 26

Belichtungsfreigabe

Impuls-former 25

Impuls-former 4

PLL Regler 6

Synchro-nisation 27

Start/Stop

Beschl. zähler 33

Frequ. Speicher 34

Takt-gen. (var.) 35

Dreh-richtg. 36

Leistgs-stufe 37

Nullmarke

Takt-generat. 20

Frequ.-teiler 19

Zeilen-länge

Start/Stop Programm SOL-Zähler 29

32

28

31

30

38

23

FIG. 2

FIG. 3